# EUROPEAN PATENT APPLICATION

(11) **EP 4 733 041 A1**
(43) Date of publication of application: **29.04.2026**
(21) Application number: 24825805.5
(22) Date of filing: 13.06.2024
(51) Int. Cl.: B29C 64/112, B29C 64/314, B29C 64/364, B33Y 10/00, B33Y 80/00

(54) **METHOD FOR PRODUCING THREE-DIMENSIONAL (3D) MOLDED ARTICLE USING ROOM TEMPERATURE-CURABLE ORGANOPOLYSILOXANE COMPOSITION, AND THREE-DIMENSIONAL (3D) MOLDED ARTICLE PRODUCED USING SAID METHOD**

(30) Priority: 22.06.2023 JP 2023102144
(71) Applicant: SHIN-ETSU CHEMICAL CO., LTD., Tokyo 100-0005 (JP)
(72) Inventor: FUJIWARA, Akitsugu, Annaka-shi, Gunma 379-0224 (JP); SATOU, Tokuo, Annaka-shi, Gunma 379-0224 (JP)
(74) Representative: Angerhausen, Christoph
(86) International application number: PCT/JP2024/021442
(87) International publication number: WO 2024/262400

(57) **Abstract**

Provided is a method for producing a three-dimensional (3D) molded article capable of being cured without consuming energy specifically intended for curing such as heating or light irradiation. The method for producing a three-dimensional (3D) molded article comprises the steps of: i) applying a first room temperature-curable organopolysiloxane composition onto a base material using a 3D printing device to form a first layer, wherein the first room temperature-curable organopolysiloxane composition exhibits a thixotropy index of 5 or higher and lower than 10; ii) allowing the first layer under non-heated conditions to form a partially cured first layer; iii) applying a second and optionally further one or more subsequent room temperature-curable organopolysiloxane compositions onto the partially cured first layer using a 3D printing device to form a second and optionally further one or more subsequent layers, wherein each composition has a thixotropy index of 5 or higher and lower than 10; and iv) allowing the second and optionally further one or more subsequent layers under non-heated conditions during each layer formation to form a partially cured second and optionally further one or more subsequent layers.

## Description

### Technical Field

The present invention relates to a method for producing a steric molded article (3D article), particularly to a method for producing a three-dimensional (3D) molded article under non-heating conditions using a condensation curable room temperature-curable organopolysiloxane composition that crosslinks and cures with atmospheric moisture (water content) to thereby provide a cured silicone rubber product as well as a 3D article (three-dimensional molded article) produced by said method.

### Background Art

Silicone rubbers are widely utilized across various fields taking advantage of their excellent heat resistance, cold resistance, and electrical properties. Room temperature vulcanizable (RTV) silicone rubber compositions (room temperature-curable organopolysiloxane composition) crosslink with moisture and cure, and therefore are easy to handle and have good weather resistance and electrical properties. For this reason, they are suitable for use in a variety of fields including sealing materials for building members and adhesives and coating agents (sealants) in electric and electronic fields. A conventional room temperature-curable organopolysiloxane composition contains a diorganopolysiloxane (base polymer) having silanol groups (silicon-bonded hydroxyl groups) or alkoxysilyl groups at the ends of the molecular chain, a curing agent, an aminoalkyl group-containing alkoxysilane, and a curing catalyst, and the composition may further contain, if necessary, a suitable type of filler for offering, for example, flame resistance, heat conductivity, and/or tensile strength.

With the ongoing growth in 3D printing technology, materials for 3D printing devices are also being actively developed. Among others, stereolithography materials of acrylic resin-based compositions or urethane-acrylic resin-based compositions are generally known (Patent Document 1). The majority of these organic resin compositions yield a hard cured product upon ultraviolet light irradiation; however, a cured product with a lower degree of hardness is often desired. In addition, these organic resin compositions are difficult to apply across a broad range of applications from the viewpoints of weather resistance and durability.

In view of this, a silicone composition containing a light-activated platinum catalyst (Patent Document 2) is presented as a more durable organic resin composition. However, this composition not only requires light irradiation for curing but also additional heating, resulting in a more complex process and thus being undesirable.

Patent Document 3 reports a three-dimensional (3D) printing method utilizing a heat-curable silicone composition. This method enables printing the heat-curable silicone composition with a 3D printing device to form layers, thereby providing a 3D article. However, the method necessitates placing the composition in an oven at a temperature of 120 to 140 °C for about 30 minutes to cure the silicone for forming the layer. Accordingly, the invention disclosed in Patent Document 3 also requires a heating process similar to that of Patent Document 2, and is therefore undesirable from the standpoint of reducing greenhouse gas emissions.

### Prior Art Documents

### Patent documents

Patent document 1: JP-A-2012-111226
Patent document 2: JP-A-2012-506933
Patent document 3: JP-B-6727290

### Summary of Invention

### Technical Problem

Accordingly, it is an object of the present invention to provide a method for producing a three-dimensional (3D) molded article having superior weather resistance and durability, capable of performing curing without requiring energy specifically intended for curing, such as heating or light irradiation.

### Solution to Problem

The inventors of the present invention have diligently conducted studies to solve the above problems and, as a result, have found that a use of a condensation curable room temperature-curable organopolysiloxane composition as a stereolithography material for performing 3D printing, preferably a use of a room temperature-curable organopolysiloxane composition containing: an organopolysiloxane (base polymer) having, on average, at least two silicon-bonded hydroxyl groups (silanol groups) or hydrolysable silyl groups per molecule; a hydrolysable (organo) silane composition (cross linking agent) capable of being reacted to the silicon-bonded hydroxyl groups or the hydrolysable silyl groups in the organopolysiloxane; an inorganic filler; and a curing catalyst, wherein the room temperature-curable organopolysiloxane composition exhibits a thixotropy index of 5 or higher and lower than 10, can achieve the above object, thus completing the present invention.

The present invention therefore provides a method for producing a three-dimensional (3D) molded article and a three-dimensional (3D) molded article produced by the production method, which are as set forth below.
<1> A method for producing a three-dimensional (3D) molded article, comprising the steps of:
   i) applying a first room temperature-curable organopolysiloxane composition onto a base material using a 3D printing device to form a first layer, wherein the first room temperature-curable organopolysiloxane composition exhibits a thixotropy index of 5 or higher and lower than 10;
   ii) allowing the first layer under non-heated conditions to form a partially cured first layer;
   iii) applying a second and optionally further one or more subsequent room temperature-curable organopolysiloxane compositions onto the partially cured first layer using a 3D printing device to form a second and optionally further one or more subsequent layers, wherein each composition has a thixotropy index of 5 or higher and lower than 10; and
   iv) allowing the second and optionally further one or more subsequent layers under non-heated conditions during each layer formation to form a partially cured second and optionally further one or more subsequent layers.
<2> The method for producing a three-dimensional (3D) molded article according to <1>, wherein the steps iii) and iv) are repeated one or more times using a third and/or further one or more subsequent room temperature-curable organopolysiloxane compositions each having a thixotropy index of 5 or higher and lower than 10.
<3> The method for producing a three-dimensional (3D) molded article according to <1> or <2>, wherein the first, second, and further one or more subsequent room temperature-curable organopolysiloxane compositions independently cure in the presence of atmospheric moisture.
<4> The method for producing a three-dimensional (3D) molded article according to any one of <1> to <3>, wherein the first, second, and further one or more subsequent room temperature-curable organopolysiloxane compositions are all identical to one another.
<5> The method for producing a three-dimensional (3D) molded article according to any one of <1> to <4>, wherein each of the first, second, and further one or more subsequent room temperature-curable organopolysiloxane compositions contains:
   (A) at least one organopolysiloxane having, on average, at least two silicon-bonded hydroxyl groups (silanol groups) or hydrolysable silyl groups per molecule;
   (B) a hydrolysable (organo) silane composition and/or a partially hydrolyzed condensate thereof;
   (C) an inorganic filler; and
   (D) a curing catalyst.
<6> The method for producing a three-dimensional (3D) molded article according to <5>, wherein the component (A) comprises one or more organopolysiloxanes represented by formula (1) and/or formula (2) defined as 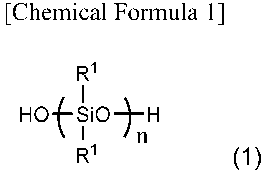 wherein, in the formula (1), each R¹ independently represents a substituted or unsubstituted monovalent hydrocarbon group having 1 to 10 carbon atoms and n is a number of 10 to 2,000; and 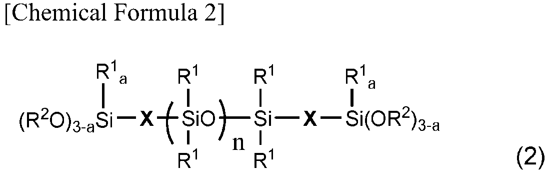 wherein, in the formula (2), each R¹ independently represents a substituted or unsubstituted monovalent hydrocarbon group having 1 to 10 carbon atoms, n is a number of 10 to 2,000, each R² independently represents a substituted or unsubstituted monovalent hydrocarbon group having 1 to 6 carbon atoms, each X independently represents an alkylene group having 1 to 4 carbon atoms or an oxygen atom, and a is 0 or 1 independently for each silicon atom to which it is bonded.
<7> The method for producing a three-dimensional (3D) molded article according to any one of <1> to <6>, further comprising: allowing a partially cured three-dimensional (3D) molded article, produced by undergoing the steps i) to iv), under non-heated conditions to produce a fully cured three-dimensional (3D) molded article.
<8> A partially cured three-dimensional (3D) molded article produced by the method according to any one of <1> to <6>.
<9> A three-dimensional (3D) molded article produced by the method according to <7>.

### Advantageous Effects of Invention

The method according to the present invention uses a room temperature-curable organopolysiloxane composition that cures with atmospheric moisture (water content) to thereby enable decarbonization without consuming energy specifically intended for curing, such as heating or light irradiation, and the method according to the present invention may provide a molded article having superior weather resistance and durability.

### Brief Description of Drawings

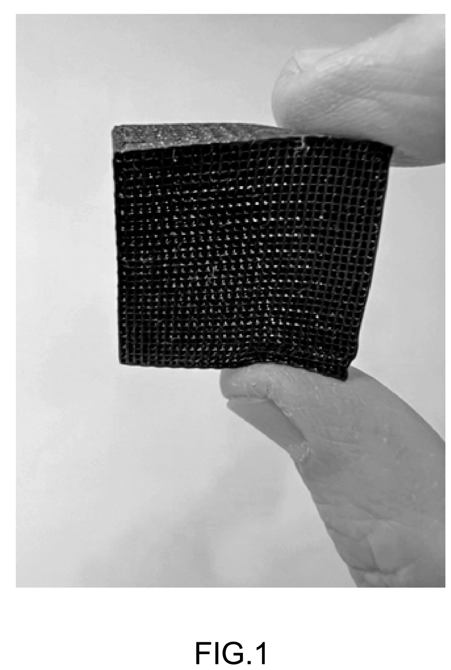

FIG. 1 shows a real picture of a three-dimensional (3D) molded article obtained by the method according to the present invention.

### Description of Embodiments

The present invention is directed to a method for producing a three-dimensional (3D) molded article, wherein the method uses a room temperature-curable organopolysiloxane composition to form a three-dimensional (3D) molded article, and may be applied in various forms relating to three-dimensional molded articles (3D articles) that are formed in accordance with the method of the present invention.

The production method of the present invention includes
a step i) of applying a first room temperature-curable organopolysiloxane composition onto a base material using a 3D printing device to form a first layer, wherein the first room temperature-curable organopolysiloxane composition exhibits a thixotropy index of 5 or higher and lower than 10. Various types of 3D printing devices and the methods thereof may be used for this step i).

The first room temperature-curable organopolysiloxane composition is applied onto the base material using a 3D printing device to form a first layer on the base material. The base material used in this step i) is not particularly limited, and any base material may be used. The base material is generally not particularly limited as long as it can be coated with the room temperature-curable organopolysiloxane composition. However, it is preferable for the material to possess sufficient strength to support the 3D article. The base material may possess functionality that enables either high mechanical strength or enhanced flexibility.

The base material may be configured in the form of a film or the like to enable separation of the 3D article from the base material. Alternatively, the 3D article may be chemically bonded to the base material, thereby enabling fabrication of an integrated article in which the base material and the 3D article form a unified structure.

The first layer, formed by 3D printing of the first room temperature-curable organopolysiloxane composition, may assume any shape or dimension. For example, the first room temperature-curable organopolysiloxane composition may be further 3D printed onto the previously formed first layer (applied in layers) prior to partially curing of the first layer in step ii) as described below (before the surface of the first layer thus formed becomes tack-free), thereby enabling successive formation of the first layer.

The production method of the present invention includes
a step ii) of allowing the first layer under non-heated conditions to form a partially cured first layer. The term "allowing ... under non-heated conditions to form a partially cured first layer," as used in the step ii), refers to a state in which the first layer is partially cured (i.e., the surface of the first layer becomes tack-free) by leaving the layer at room temperature (-10°C to 35 °C) for a predetermined period without applying heat. That is, in the step ii), the first layer on the base material formed in the step i) is exposed to the ambient environment for a certain period of time as described below. In certain embodiments, room temperature may range from -10 °C to 35 °C, alternatively from 0 °C to 35 °C, and preferably from 10 °C to 35 °C. If the temperature under non-heated conditions is excessively low, the first layer may cure slowly, resulting in reduced crosslink density, which may hinder formation of the desired 3D article. The duration of the certain period of time depends on the application conditions of the first layer (e.g., thickness, width), and may be, for example, from 10 seconds to 120 minutes, preferably from 30 seconds to 90 minutes, more preferably from 1 minute to 60 minutes, and even more preferably from 2 minutes to 30 minutes.

The environment in which the non-heated condition in the step ii) is maintained may optionally be achieved using a device for supplying humidity. Examples of such humidity supplying device include an evaporation-type humidifier that humidifies by evaporating water into water vapor, a steam-type humidifier that sprays water in the form of steam at 100 °C or higher, and a water spray-type humidifier that sprays fine water droplets directly into the air.

The curing of the partially cured layer can be indicated by, for example, an increase in viscosity of the layer, a change in transparency of the layer, an increase in hardness of the surface or entire layer. The physical properties of the layer generally undergo change during the process of forming a partially cured layer. Specifically, an indicator of cure for the partially cured layer may be determined by whether a part of the surface layer in contact with atmospheric moisture is in a state in which no surface material adheres to a finger during a finger test (i.e., a tack-free state).

It is important that the first layer formed on the base material retain its shape and transition into a partially cured first layer when exposed to the ambient environment in the step ii). The term "retain its shape" refers to the condition in which the first layer formed on the base material maintains its shape, specifically by transitioning into a partially cured first layer without undergoing fluidization or deformation when exposed to the ambient environment.

The first room temperature-curable organopolysiloxane composition is preferably fluid or non-fluid; however, from the standpoint of shape retainability of the partially cured layer, the composition is particularly preferably non-fluid. The viscosity of the first room temperature-curable organopolysiloxane composition may be adjusted according to the type of the 3D printing device and the coating characteristics. For example, the viscosity of the first room temperature-curable organopolysiloxane composition may be adjusted by, for example, selecting the molecular weight of the organopolysiloxane component which is a structural component of the first room temperature-curable organopolysiloxane composition, by incorporating an inorganic filler, by adding or removing a diluent, or by introducing a thixotropic agent.

The production method of the present invention includes
a step iii) of applying a second and optionally further one or more subsequent room temperature-curable organopolysiloxane compositions (i.e., a second room temperature-curable organopolysiloxane composition and/or, optionally, a third and further one or more subsequent room temperature-curable organopolysiloxane compositions) onto the partially cured first layer (or the preceding layer) using a 3D printing device to form a second and optionally further one or more subsequent layers (succeeding layers), wherein each composition has a thixotropy index of 5 or higher and lower than 10. This step iii) and the subsequent step iv) as described below may optionally be further repeated one or more times as required to laminate a third or further one or more subsequent layers, thereby forming a more complex molded article. As used herein, the term "3D printing device" may refer to the same device employed in the step i), or alternatively, a different device. In addition, the second and optionally further one or more subsequent room temperature-curable organopolysiloxane compositions may be identical to or different from the first room temperature-curable organopolysiloxane composition. That is, the first, second, and subsequent room temperature-curable organopolysiloxane compositions may be all identical to one another or may comprise two or more mutually different types.

According to the method of the present invention, when producing a three-dimensional (3D) molded article comprising three or more layers, steps iii) and iv) may be repeated as necessary to achieve the desired number of layers. For example, when forming the n^{th} layer, the step iii) is a step of applying an n^{th} room temperature-curable organopolysiloxane composition onto the partially cured (n-1)^{th} layer using a 3D printing device to form an n^{th} layer, wherein the composition has a thixotropy index of 5 or higher and lower than 10, while the step iv) is a step of allowing the n^{th} layer under non-heated conditions to form a partially cured n^{th} layer (n as used herein refers to an integer of three or more).

The second and optionally further one or more subsequent layers (succeeding layers) may assume any shape or dimension as is the case with the first layer (or the preceding layer). For example, the second and optionally further one or more subsequent layers may be continuous or discontinuous, and may have any thickness value. The second and optionally further one or more subsequent layers may also assume any shape, dimension, or size, which may be identical to or different from those of the first layer.

The second and optionally further one or more subsequent layers may have different thicknesses and line widths, which may be selected based on the 3D printing equipment and/or processes. Each of the second and subsequent layers may have a uniform or non-uniform thickness, and their average thicknesses may be identical to or different from one another. The average thicknesses of the second and subsequent layers are preferably each independently within a range of 1 to 100,000 µm, more preferably within a range of approximately 2 to 50,000 µm, and particularly preferably within a range of approximately 5 to 30,000 µm.

At the time of performing the step iii) to print the second layer, the partially cured first layer is undergoing curing and is not in a fully cured state. Similarly, at the time of performing the step iii) to print the n^{th} layer (succeeding layer), the partially cured (n-1)^{th} layer (preceding layer) is undergoing curing and is not in a fully cured state. The distinction between partially cured and fully cured states may be determined based on whether the partially cured layer remains capable of further curing at room temperature. The functional groups capable of participating in crosslinking may remain present after reaching the fully cured state, but generally remain unreacted. In the context of the production method of the present invention, the printing of a layer refers to a condition in which adjacent layers are chemically bonded to each other. For example, the structural components of each layer can be chemically crosslinked and cured across the layers. The crosslinking across the layers can be beneficial in terms of durability and longevity of the 3D article.

Accordingly, the second layer is formed in contact with a portion of the exposed surface of the partially cured first layer, and the n^{th} layer is formed in contact with a portion of the exposed surface of the partially cured (n-1)^{th} layer.

The production method of the present invention includes
a step iv) of allowing the second and optionally further one or more subsequent layers under non-heated conditions during each layer formation to form a partially cured second and optionally further one or more subsequent layers. The phrase "allowing ... under non-heated conditions to form a partially cured second and optionally further one or more subsequent layers" refers to a step in which the second and optionally further one or more subsequent layers is left at room temperature (-10°C to 35°C) for a predetermined period without the application of heat to cure a portion of the second and optionally further one or more subsequent layers (thus resulting in a tack-free surface of the second and optionally further one or more subsequent layers). The step iv) may be carried out under the same or different conditions as the step ii). Furthermore, the environment in which the layer is left at room temperature may be subject to the same or different conditions as those of the step ii). Similar to the step ii), the step iv) involves allowing an article, bearing the second and optionally further one or more subsequent layers, in an unheated state for a certain period of time. In various embodiments, the non-heated state and the certain period of time are identical to those in the step ii). In other words, the room temperature under non-heated conditions ranges from -10°C to 35°C, alternatively from 0°C to 35°C, and preferably from 10°C to 35°C. If the temperature during the non-heated conditions is excessively low, the second and optionally further one or more subsequent layers may cure slowly, resulting in reduced crosslink density, which may hinder formation of the desired 3D article. The duration of the certain period of time depends on the application conditions (e.g., thickness, width) of the respective layers of the second and subsequent layers, and may be, for example, from 10 seconds to 120 minutes, preferably from 30 seconds to 90 minutes, more preferably from 1 minute to 60 minutes, and even more preferably from 2 minutes to 30 minutes.

The environment in which the non-heated condition in step iv) is maintained may optionally be achieved using a device for supplying humidity in certain embodiments as is the case in the step ii). Examples of such device for supplying humidity include an evaporation-type humidifier that humidifies by evaporating water into water vapor, a steam-type humidifier that sprays water in the form of steam at 100 °C or higher, and a water spray-type humidifier that sprays fine water droplets directly into the air.

The exposure environment for forming each layer may also be modified to control the layer formation time. In other words, a different 3D printing device may be used in the step iii) of forming each layer from the second layer onwards. Using different types of printing devices makes it possible to impart different characteristics to individual layers, enabling the production of a variety of molded products.

In various embodiments, examples of such 3D printing device include a fused deposition modeling printer, a stereolithography printer, an inkjet printer, a powder sintering printer, a powder adhesive printer, a material jet printer, an additive manufacturing printer, and a syringe extrusion printer. The 3D printing device may be selected independently according to each printing process (i.e., the step i) or the step iii)) associated with the method of the present invention.

3D printing is generally a technique in which a target object is scanned and stored as a digital source in a computer to produce a precisely molded product using the above-described 3D printing device. An example of these processes will be described below.

A physical object intended to be fabricated via the 3D printing may be scanned using a 3D scanner, and the scanned data may be used to create a digital source or program. Alternatively, the digital source or program may be designed without scanning the physical object to be 3D printed.

The digital source or program in the computer is generally converted into a file format. This file is read by the 3D printing software. This software issues machine instructions enabling the 3D printing device to construct the object layer by layer. The thickness of each layer can be appropriately determined, allowing the fabrication of objects with various thicknesses. The 3D printing device and process used in the method of the present invention may also adjust or control surrounding environmental conditions. For example, the base material forming the layers may be heated before, during, or after the printing process to maintain a constant temperature in the base material (control temperature), thereby promoting curing of the applied room temperature-curable organopolysiloxane composition without the need for heating the composition. Curing may also be promoted by adjusting the temperature and/or humidity of the surrounding environment. Furthermore, during any printing process, the base material may be rotated, tilted, or otherwise repositioned.

The 3D printing device is typically provided with a dispenser for printing a specific type of room temperature-curable organopolysiloxane composition, such as a nozzle or a printing head. The dispenser may be heated before, during, or after the application of the room temperature-curable organopolysiloxane composition. Alternatively, humidity may be introduced. A single dispenser may be used alone, or multiple dispensers may be used in combination to perform the 3D printing process.

The method of the present invention is analogous to a conventional extrusion process. In general, extrusion is characterized by dispensing a molding material through a nozzle and prints a cross-sectional shape of the object to form a shaped object, which is repeated sequentially for the succeeding layers. The method of the present invention is distinctive from the prior art extrusion molding in that the present invention uses a room temperature-curable organopolysiloxane composition. The dispenser or nozzle may be heated, but is preferably unheated since it employs a room temperature-curable organopolysiloxane composition. It is preferred that the room temperature-curable organopolysiloxane composition employed in each step of the method according to the present invention typically exhibits physical properties in the form of a slurry, gel, or paste. Simply allowing the printed composition to remain at room temperature is sufficient to form a partially cured layer. Repetition of this process ultimately results in the formation of a three-dimensional article.

During the formation of each layer (i.e., during the steps (i) and (iii)), the nozzle and the platform for forming the three-dimensional article move in a planar direction. Upon completion of each layer formation, they move in a vertical direction. In this manner, the article is constructed sequentially from the bottom, layer by layer.

In various embodiments, the method of the present invention is analogous to the process employed in the conventional material jet printer. The material jet printer often shares similarities with an existing paper printer, such as an inkjet printer. This process utilizes a printer head with a broad range of motion around the ejection area, capable of dispensing a specific type of room temperature-curable organopolysiloxane composition. Repetition of this process allows a target object to be constructed layer by layer. The resulting target object may optionally be subjected to any post-processing step, such as further heating or humidification. This step facilitates the curing of the room temperature-curable organopolysiloxane composition, enhances the mechanical strength of the 3D article, and reinforces the bonding in each layer.

According to the method for producing a three-dimensional (3D) molded article of the present invention, steps (i) to (iv) may be performed, and in particular, steps (iii) and (iv) may be repeated a predetermined number of times (e.g., one or more times, for example from 1 to 100 times, particularly about 10 to 50 times), thereby sequentially laminating a predetermined number of second and optionally further one or more subsequent layers onto the first layer to produce a partially cured three-dimensional (3D) molded article. The partially cured three-dimensional (3D) molded article may subsequently be maintained under non-heated conditions for a predetermined period of time to yield a fully cured three-dimensional (3D) molded article. In this case, the time required for complete curing of the partially cured three-dimensional (3D) molded article may vary depending on the size of the article, including the thickness and dimensions of each layer and the total number of layers. However, curing is typically achieved within a range of 6 hours to 7 days, preferably about 12 hours to 2 days, under environmental conditions of 23°C ± 10°C and 50% RH.

The first room temperature-curable organopolysiloxane composition and the second and further one or more subsequent room temperature-curable organopolysiloxane compositions (i.e., the second composition and/or optionally the third or further one or more subsequent compositions) used in the method for producing a three-dimensional (3D) molded article according to the present invention may all be identical or may comprise two or more different compositions. The room temperature-curable organopolysiloxane composition appropriately selected during each repetition of steps (iii) and (iv) may be used. The first, second, and further one or more subsequent room temperature-curable organopolysiloxane compositions, along with any selected room temperature-curable organopolysiloxane compositions used to form additional layers when the steps iii) and iv) are repeated, may be any organopolysiloxane compositions that cure at room temperature. In various embodiments, examples of the room temperature-curable organopolysiloxane composition include those to be listed below.

The room temperature-curable organopolysiloxane composition is preferably an organopolysiloxane composition cures by moisture in the air, and is not intended to be cured by heating. A form that cures due to moisture in the air and a form that cures due to radiation may also be used in combination (dual curing) to produce the organopolysiloxane composition (dual cure).

The room temperature-curable organopolysiloxane composition is preferably one that partially cures at room temperature (under non-heating conditions) in 10 seconds to 120 minutes (i.e., the surface portion in contact with atmospheric moisture becomes tack-free), and for example, one that contains the following components is preferred. In cases where the room temperature-curable organopolysiloxane composition used in the method of the present invention is a condensation-curable type that cures due to atmospheric moisture, curing begins at the surface portion (thin film portion) exposed to the moisture in the air and gradually advances toward the interior of the composition. The time required for complete curing (complete curing time) of not only the surface portion (thin film portion) in contact with atmospheric moisture but also the interior portion not exposed to air (i.e., the entire composition) is typically about 6 hours to 7 days, and preferably about 12 hours to 2 days, under conditions of 23°C ± 10°C and 50% RH.

The components (A) to (D):
(A) at least one organopolysiloxane having, on average, at least two silicon-bonded hydroxyl groups (silanol groups) or hydrolysable silyl groups per molecule;
(B) a hydrolysable (organo) silane composition capable of being reacted with the silicon-bonded hydroxyl groups or the hydrolysable silyl groups in the organopolysiloxane and/or a partially hydrolyzed condensate thereof;
(C) an inorganic filler; and
(D) a curing catalyst,
will be fully described below.

### [Component (A)]

The component (A) serves as a main ingredient (base polymer), and examples of which include those represented by formula(e) (1) and/or (2) defined as: 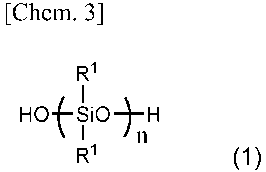 and

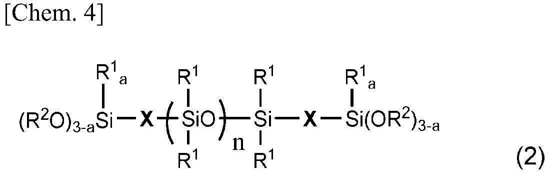

In the formulae (1) and (2), each R¹ independently represents a substituted or unsubstituted monovalent hydrocarbon group having 1 to 10 carbon atoms, and n is a number of 10 to 2,000. In the formula (2), each X independently represents an oxygen atom or an alkylene group having 1 to 4 carbon atoms, each R² independently represents a substituted or unsubstituted monovalent hydrocarbon group having 1 to 6 carbon atoms, and a is 0 or 1 independently for each silicon atom to which it is bonded.

In the above formulae (1) and (2), each R¹ independently represents an unsubstituted or halogen substituted monovalent hydrocarbon group having 1 to 10, preferably 1 to 6, carbon atoms, and examples of which include an alkyl group such as a methyl group, an ethyl group, a propyl group, an isopropyl group, a butyl group, an isobutyl group, a sec-butyl group, a tert-butyl group, a pentyl group, a neopentyl group, a hexyl group, a heptyl group, an octyl group, a 2-ethylhexyl group, a nonyl group, or a decyl group; a cycloalkyl group such as a cyclopentyl group or a cyclohexyl group; an alkenyl group such as a vinyl group, an allyl group, a propenyl group, an isopropenyl group, a butenyl group, a pentenyl group, a hexenyl group, or a cyclohexenyl group; an aryl group such as a phenyl group, a tolyl group, a xylyl group, or an α-naphthyl group or a β-naphthyl group; an aralkyl group such as a benzyl group, a 2-phenylethyl group, or a 3-phenylpropyl group; and a group in which some hydrogen atoms of any one of these groups are substituted by halogen atoms, such as 3,3,3-trifluoropropyl group. Among others, a methyl group is particularly preferred. The plurality of R¹ groups may also be all identical or different from one another.

In the above formulae (1) and (2), n is an integer of 10 to 2,000, preferably of 20 to 1,500, more preferably of 30 to 1,000, even more preferably 50 to 800. The value of n within the above range results in a diorganopolysiloxane of the component (A) that exhibits a viscosity at 23° C in the range of 25 to 500,000 mPa·s, preferably of 500 to 100,000 mPa·s.

It is noted that n is the number of repeating units (degree of polymerization) for the difunctional diorganosiloxane unit represented by ((R¹)₂SiO_{2/2}) that consists the backbone of the diorganopolysiloxane of the component (A), and the n may be typically determined as a number average degree of polymerization (or number average molecular weight) by gel permeation chromatography (GPC) analysis in terms of polystyrene standards using toluene or the like as a developing solvent. Also, the viscosity may typically be measured at 23°C by a rotational viscometer (e.g., of BL, BH, BS or cone plate type, or rheometer).

In the formula (2), each X independently represents an oxygen atom or an alkylene group having 1 to 4 carbon atoms, and examples of such alkylene group having 1 to 4 carbon atoms include a linear alkylene group such as a methylene group, an ethylene group, a trimethylene group, or a tetramethylene group, and an isomer thereof including a branched alkylene group such as a propylene group (methylethylene group) and 2-methyl-trimethylene group. X is particularly preferably an ethylene group. It is quite versatile that X is an ethylene group because it can be readily synthesized by effecting hydrosilylation addition reaction of a corresponding hydrosilane to α, ω-divinyl-terminated polyorganosiloxane in the presence of a metal catalyst.

In the above formula (2), R² independently represents a substituted or unsubstituted monovalent hydrocarbon group having 1 to 6 carbon atoms, and examples thereof include an alkyl group such as a methyl group, an ethyl group, a propyl group, an isopropyl group, a butyl group, an isobutyl group, a sec-butyl group, a tert-butyl group, a pentyl group, or a hexyl group; an alkoxy-substituted alkyl group such as a methoxymethyl group, a methoxyethyl group, an ethoxymethyl group, or an ethoxyethyl group; a cycloalkyl group such as a cyclohexyl group; an alkenyl group such as a vinyl group, an allyl group, or a propenyl group; and a phenyl group. Among these, a methyl group and an ethyl group are particularly preferred.

In the above formula (1), a is 0 or 1 independently for each silicon atom to which it is bonded, and preferably is 0.

One type of the organopolysiloxanes of the component (A) may be used alone, or two or more types thereof may be used in combination. It is preferred that the room temperature-curable organopolysiloxane composition contain the component (A) in an amount of 10 to 95% by mass, more preferably 15 to 95% by mass, and even more preferably 20 to 90% by mass.

### [Component (B)]

The component (B) is a hydrolyzable (organo)silane compound and/or a partially hydrolyzed condensate thereof. It functions as a crosslinker (curing agent) which hydrolyzes with moisture and the component (A), and causes the component (A) to crosslink (cure) through a condensation reaction. The component (B) is preferably a hydrolyzable(organo)silane compound having hydrolyzable groups, which is represented by formula (3) defined below, or a bis-silane or tri-silane compound having at least three (particularly 4 to 6) hydrolyzable groups per molecule.

It is noted that the term "partially hydrolyzed condensate" as used herein refers to an organosiloxane oligomer having at least two, preferably at least three, particularly three to six residual hydrolyzable groups per molecule, created through partial hydrolysis and condensation of the hydrolyzable (organo)silane compound.
[Chem. 5]

(R³)₄₋ₘSiYₘ (3)

In the formula, each R³ represents an unsubstituted or substituted monovalent hydrocarbon group having 1 to 10 carbon atoms, each Y is independently a hydrolyzable group, and m is 3 or 4.

In the above formula (3), R³ represents an unsubstituted or substituted monovalent hydrocarbon group having 1 to 10 carbon atoms, and examples thereof include an alkyl group such as a methyl group, an ethyl group, a propyl group, a butyl group, a hexyl group, a heptyl group, or a decyl group; an alkenyl group such as a vinyl group, an allyl group, a butenyl group, a pentenyl group, a hexenyl group, or a heptenyl group; an aryl group such as a phenyl group, a tolyl group, a xylyl group, or a naphthyl group; an aralkyl group such as a benzyl group or a phenethyl group; or a halogen-substituted alkyl or aryl group, such as a chloromethyl group, a bromoethyl group, a 3-chloropropyl group, a 3,3,3-trifluoropropyl group, or a chlorophenyl group. Among these, an alkyl group is preferred, with a butyl group, a hexyl group, a heptyl group, and a decyl group being particularly preferred.

In the above formula (3), each hydrolyzable group represented by Y independently represents, for example, an alkoxy group having 1 to 4 carbon atoms, particularly having 1 or 2 carbon atoms, such as a methoxy group, an ethoxy group, a propoxy group, an isopropoxy group, or a butoxy group; an alkoxy-substituted alkoxy group having 2 to 4 carbon atoms, such as a methoxymethyl group or a methoxyethyl group; a ketoxime group having 3 to 5 carbon atoms, such as a dimethylketoxime group, a diethylketoxime group, or an ethylmethylketoxime group; an alkenyloxy group having 2 to 4 carbon atoms, such as a vinyloxy group, an allyloxy group, a propenoxy group, or an isopropenoxy group; an acyloxy group having 2 to 4 carbon atoms, such as an acetoxy group or a propeonoxy group; or a dialkylaminooxy group having 2 to 4 carbon atoms, such as a dimethylaminooxy group, among which preferred are an alkoxy group and an alkenyloxy group, and an alkoxy group is particularly preferred.

In the above formula (3), m is 3 or 4.

Examples of hydrolyzable (organo)silane compounds for use as the component (B) include: an alkane compound, preferably having 2 to 6 carbon atoms, and having two silyl groups located at opposite ends of the molecular chain (one at each end), each silyl group containing a hydrolyzable group such as a trialkoxysilyl group or an dialkoxy(organo)silyl group containing two or three alkoxy groups (i.e., a so-called bis-silane compound having two hydrolyzable silyl groups located at the molecular chain terminals); and a diorganosilylene compound having two hydrolyzable silyl groups, such as trialkoxysilyl groups or dialkoxy(organo)silyl groups, located at opposite ends of the molecular chain (one at each end) via an alkylene group such as an ethylene group or an alkenylene group such as an ethenylene (vinylene) group (i.e., a so-called tri-silane compound having three silyl or silylene groups in one molecule).

In these bis-silane compounds and tri-silane compounds, examples of the hydrolyzable group include those as exemplified for Y in the formula (3) above, and examples of the group bonded to silicon atoms which is not a hydrolyzable group include those exemplified for R³ in the formula (3) above.

Specific examples of the component (B) include an organotrialkoxysilane such as methyltrimethoxysilane, methyltriethoxysilane, vinyltrimethoxysilane, vinyltriethoxysilane, phenyltrimethoxysilane, phenyltriethoxysilane, ethyltrimethoxysilane, ethyltriethoxysilane, n-propyltrimethoxysilane, n-propyltriethoxysilane, n-butyltrimethoxysilane, n-butyltriethoxysilane, isobutyltrimethoxysilane, n-hexyltrimethoxysilane, or n-decyltrimethoxysilane; a tetraalkoxysilane such as tetramethoxysilane, tetraethoxysilane, methyl silicate, ethyl silicate, tetramethyl orthosilicate, or tetraethyl orthosilicate, or a partially hydrolyzed condensate thereof; a tetraalkoxydisilane compound such as 1,2-bis(dimethoxy(methyl)silyl)ethane, 1,2-bis(diethoxy(methyl)silyl)ethane, 1,6-bis(dimethoxy(methyl)silyl)hexane, or 1,6-bis(diethoxy(methyl)silyl)hexane; a hexaalkoxydisilane compound such as 1,2-bis(trimethoxysilyl)ethane, 1,2-bis(triethoxysilyl)ethane, 1,6-bis(trimethoxysilyl)hexane, or 1,6-bis(triethoxysilyl)hexane; a tetraalkoxytrisilane compound such as bis[2-(dimethoxy(methyl)silyl)ethyl]dimethylsilane, bis[2-(diethoxy(methyl)silyl)ethyl]dimethylsilane, bis[2-(dimethoxy(methyl)silyl)ethenyl]dimethylsilane, or bis[2-(diethoxy(methyl)silyl)ethenyl]dimethylsilane; a hexaalkoxytrisilane compound such as bis[2-(trimethoxysilyl)ethyl]dimethylsilane, bis[2-(triethoxysilyl)ethyl]dimethylsilane, bis[2-(trimethoxysilyl)ethenyl]dimethylsilane, or bis[2-(triethoxysilyl)ethenyl]dimethylsilane; an (organo)isopropenoxysilane such as methyltriisopropenoxysilane, ethyltriisopropenoxysilane, vinyltriisopropenoxysilane, or phenyltriisopropenoxysilane; a ketoximesilane such as methyltris(dimethylketoxime)silane, methyltris(methylethylketoxime)silane, ethyltris(methylethylketoxime)silane, methyltris(methylisobutylketoxime)silane, vinyltris(methylethylketoxime)silane, or phenyltris(methylethylketoxime)silane; and an (organo)acetoxysilane such as methyltriacetoxysilane, ethyltriacetoxysilane, or vinyltriacetoxysilane. The component (B) may be used alone or in combination of two or more.

The added content of the component (B) is preferably in an amount of 0.1 to 30% by mass relative to the content of the component (A) (that is, 0.1 to 30 parts by mass per 100 parts by mass of the component (A)), more preferably in an amount of 1 to 30% by mass (1 to 30 parts by mass), and particularly preferably in an amount of 2 to 25% by mass (2 to 25 parts by mass). An amount of the component (B) less than 0.1% by mass relative to the content of the component (A) may result in insufficient crosslinking through moisture, thereby making it difficult to obtain a cured product exhibiting the desired rubber elasticity. Meanwhile, an amount of the component (B) exceeding 30% by mass relative to the content of the component (A) may readily lead to deterioration in the mechanical properties of the resulting cured product and may cause separation from the organopolysiloxane composition.

The hydrolyzable (organo)silane compound of the component (B) is characterized by the absence of monovalent hydrocarbon groups substituted with functional groups containing at least one heteroatom selected from nitrogen, oxygen, and sulfur in the molecule, apart from the hydrolyzable group Y, and this feature clearly distinguishes it from silane coupling agents-namely, carbon-functional group-containing hydrolyzable (organo)silane compounds or carbon-functional silanes-which are typically incorporated into room temperature-curable organopolysiloxane compositions as adhesion promoters.

### [Component (C)]

The component (C) is an inorganic filler incorporated for the purpose of enhancing properties such as strength and thixotropy of the composition, and specific examples thereof include silica-based fillers, such as dry silicas (e.g., pyrogenic silica, ground silica, fused silica, and fumed silica), wet silicas (e.g., precipitated silica, colloidal silica, and sol-gel silica), and crystalline silica (e.g., finely divided quartz), as well as aluminum hydroxide, alumina, boehmite, magnesium hydroxide, magnesium oxide, calcium hydroxide, calcium carbonate, zinc carbonate, basic zinc carbonate, zinc oxide, titanium oxide, carbon black, glass beads, and glass balloons. These fillers may be used individually or in combinations of two or more. The inorganic filler may be hydrophobically surface-treated with known treating agents or may remain untreated.

The component (C) is used in an amount within the range of preferably 0.1 to 500 parts by mass, more preferably 1 to 400 parts by mass, per 100 parts by mass of the organopolysiloxane of the component (A). The composition having component (C) in an amount of less than 0.1 parts by mass per 100 parts by mass of the component (A) fails to provide the composition with sufficient strength, while the one having the component (C) in an amount of greater than 500 parts by mass reduces elasticity in the resultant rubber property, which leads to an issue of economic disadvantage.

### [Component (D)]

The component (D) is an important compound that serves as a curing catalyst in the room temperature-curable organopolysiloxane composition, and may be the same or contain different compounds, and may be used alone or as a mixture of two or more compounds. Examples of the component (D) include organic carboxylates and alkoxides of metals such as tin, titanium, zirconium, iron, antimony, bismuth, and manganese; organic titanate esters; organic titanium chelate compounds; and more specific examples thereof include tin compounds such as dibutyltin dilaurate, dibutyltin dioctoate, dioctyltin dilaurate, dibutyltin maleate ester, dimethyltin dineodecanoate, dibutyltin dimethoxide, dioctyltin dineodecanoate, and stannous octoate; organic titanium compounds such as tetra-n-butyl titanate, diisopropoxybis(acetylacetonate)titanium, and diisopropoxybis(ethylacetoacetate)titanium; and amine compounds such as dibutylamine, laurylamine, tetramethylguanidine, and tetramethylguanidylpropyltrimethoxysilane, and salts thereof. It is preferred that an organotitanium compound or an organotin compound be added as it imparts excellent curing properties to the composition of the present invention, including rapid curing and deep curing; among these, titanium alkoxides and titanium chelates are particularly preferred.

The amount of the component (D) added is preferably 0.1 to 10% by mass, more preferably 0.2 to 8% by mass, and particularly preferably 0.5 to 5% by mass, based on the amount of component (A) (i.e., preferably 0.1 to 10 parts by mass, more preferably from 0.2 to 8 parts by mass, and particularly preferably from 0.5 to 5 parts by mass, per 100 parts by mass of the component (A)). An amount of the component (D) less than 0.1% by mass based on the amount of the component (A) may fail to result in sufficient crosslinking. An amount of the component (D) exceeding 10% by mass based on the amount of the component (A) may be disadvantageous in terms of cost or reduce the curing speed.

### [Further Components]

In order to further improve adhesion of the cured product of the composition according to the present invention to various adherends, as an optional component that can be blended as required, a silane coupling agent (a hydrolyzable silane compound such as an alkoxysilane having, in one molecule, a monovalent hydrocarbon group having a functional group (excluding a guanidyl group) containing a heteroatom selected from nitrogen, sulfur, and oxygen, or a so-called carbon functional silane compound) may be added to the composition as an adhesion-imparting agent. The silane coupling agent may be a silane compound having, as a hydrolyzable group, an alkoxysilyl group or an alkenoxysilyl group, and examples thereof include vinyltris(β-methoxyethoxy)silane, γ-methacryloxypropyltrimethoxysilane, β-(3,4-epoxycyclohexyl)ethyltrimethoxysilane, γ-glycidoxypropyltrimethoxysilane, γ-glycidoxypropylmethyldiethoxysilane, N-β-(aminoethyl) γ-aminopropyltrimethoxysilane, γ-aminopropyltriethoxysilane, 3-(N-aminomethylbenzylanuno)propyltrimethoxysilane, N,N'-bis[3-(trimethoxysilyl)propyl]ethylenediamine, N,N-bis[3-(trimethoxysilyl)propyl]amine, γ-mercaptopropyltrimethoxysilane, γ-glycidoxypropyltriisopropenoxysilane, γ-glycidoxypropylmethyldiisopropenoxysilane, reaction products of (meth)acrylsilane and an aminosilane, a reaction product of an epoxysilane and an aminosilane, and a reaction product of an aminosilane and an alkyl halide group-containing silane. In particular, a silane coupling agent having at least one amino group or epoxy group in one molecule is preferably used.

When a silane coupling agent is blended, the amount blended is usually 0.1 to 10% by mass, preferably 0.1 to 8% by mass, particularly preferably 0.1 to 5% by mass per the amount of the component (A) contained therein. If the amount is less than 0.1%by mass, sufficient adhesion may not be obtained. If the amount exceeds 10% by mass, satisfactory mechanical properties may not be obtained, and it may be disadvantageous in terms of cost.

The room temperature-curable organopolysiloxane composition according to the present invention may contain, in addition to the foregoing components, various additives as optional components. Publicly known additives may be added as the additives as long as the object of the invention is not impaired. Examples thereof include a diorganosiloxane capped at one end of the molecular chain with a trialkylsilyl group serving as a wetter (dispersant) and a polyether compound serving as a thixotropy improver such as a polypropylene compound capped at both ends of the molecular chain with hydrolyzable siloxy groups, a non-reactive dimethylsilicone oil (a dimethylpolysiloxane capped at both ends of the molecular chain with trialkylsilyl groups) and isoparaffin serving as plasticizers, and three-dimensional network-structured organopolysiloxane resins composed of a trimethylsiloxy unit [(CH₃)₃SiO_{1/2} unit] and a SiO₂ unit and serving as crosslinking density improvers.

Furthermore, if necessary, coloring agents such as pigments, dyes, and fluorescent brighteners; fungicides; antibacterial agents, bleed oil such as non-reactive phenylsilicone oil (methylphenylpolysiloxane capped at both ends of the molecular chain with trialkylsilyl groups) and fluorosilicone oil (methyl(3,3,3-trifluoropropyl)polysiloxane capped at both ends of the molecular chain with trialkylsilyl groups); surface modifiers such as organic liquids incompatible with silicones; and solvents such as toluene, xylene, solvent volatile oil, cyclohexane, methylcyclohexane, and low-boiling point isoparaffin may also be added.

### •Method for Producing Room temperature-curable organopolysiloxane composition

The room temperature-curable organopolysiloxane composition used for the present invention can be obtained by mixing the foregoing components (A) to (D) and, as appropriate, further components. The mixing method may be an existing method, and the components may be mixed together under reduced pressure.

From the standpoint of ensuring stability during 3D scanning of the 3D article to be fabricated, the room temperature-curable organopolysiloxane composition employed in the present invention is required to exhibit a thixotropy index-defined as the ratio of viscosity measured at a rotational speed of 1 rpm to that measured at 10 rpm, using a B-type viscometer in accordance with JIS K 6249 (measured viscosity value at 1 rpm/ measured viscosity value at 10 rpm)-of 5 or greater and less than 10. Preferably, the thixotropy index is 5.0 to 9.5, more preferably 6.0 to 9.5, and even more preferably 7.0 to 9.0.

### Examples

Hereinafter, examples of the room temperature-curable organopolysiloxane composition for specifically illustrating the invention will be shown, but the invention shall not be limited to the following examples. In each example, the viscosity and thixotropy index are values measured by a rotational viscometer at 23°C, and the degree of polymerization is a number-average degree of polymerization in terms of polystyrene as measured by gel permeation chromatography analysis using toluene as a developing solvent. The room temperature refers to 23°C and Me refers to a methyl group.

### <Composition example 1>

100 parts by mass of a dimethylpolysiloxane capped at both molecular chain terminals with trimethoxysiloxy groups and having a viscosity of 20,000 m·Ps (i.e., a dimethylpolysiloxane capped at both molecular chain terminals with trimethoxysiloxy groups, which corresponds to the one shown by the above formula (2), where X = an oxygen atom, R¹ = R² = a methyl group, a = 0, and n = approximately 610.); 8 parts by mass of a dimethylpolysiloxane capped at one molecular chain terminal with a trimethylsiloxy group and at the other molecular chain terminal with a trimethoxysiloxy group, which is represented by formula (4) below and exhibits a viscosity of 30 mPa·s as a wetter (dispersant); 0.8 parts by mass of polypropylene (number average molecular weight of 8,300) capped at both molecular chain terminals with di(isopropenoxy)methylsiloxy groups, which exhibits a viscosity of 3,500 mPa· s and serves as a thixotropy improver; and 24 parts by mass of fumed silica surface-treated with hexamethyldisilazane having a BET specific surface area of 200 m²/g were mixed at room temperature for 30 minutes and subsequently processed through a three-roll mill, manufactured by Inoue Mfg. Co., Ltd., once to prepare a composition base A.

Into 100 parts by mass of the composition base A were uniformly mixed 0.5 parts by mass of carbon black, 5 parts by mass of vinyltrimethoxysilane, 1 part by mass of an aminosilane represented by formula (5) shown below, and 5 parts by mass of diisopropoxytitanium bis(ethylacetoacetate) at room temperature for 20 minutes to obtain Composition 1.

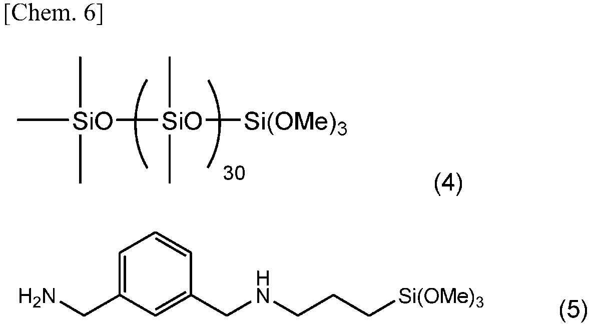

### <Composition Example 2>

100 parts by mass of a dimethylpolysiloxane capped at both molecular chain terminals with trimethoxysiloxy groups and having a viscosity of 20,000 mPa·s (i.e., a dimethylpolysiloxane capped at both molecular chain terminals with trimethoxysiloxy groups, which corresponds to the one shown by the above formula (2), wherein X = an oxygen atom, R¹ = R² = a methyl group, a = 0, and n = approximately 610); 8 parts by mass of n-decyltrimethoxysilane; 0.8 parts by mass of polypropylene (number average molecular weight of 8,300) capped at both molecular chain terminals with di(isopropenoxy)methylsiloxy groups, which exhibits a viscosity of 3,500 mPa·s; and 24 parts by mass of fumed silica surface-treated with hexamethyldisilazane having a BET specific surface area of 200 m²/g were mixed at room temperature for 30 minutes and subsequently processed through a three-roll mill, manufactured by Inoue Mfg. Co., Ltd., once to prepare Composition Base B.

Into 100 parts by mass of the composition base B were uniformly mixed 0.5 parts by mass of carbon black, 5 parts by mass of vinyltrimethoxysilane, 1 part by mass of an aminosilane represented by the above formula (5), and 5 parts by mass of diisopropoxytitanium bis(ethylacetoacetate) at room temperature for 20 minutes to obtain Composition 2.

### <Composition Example 3>

100 parts by mass of a dimethylpolysiloxane capped at both molecular chain terminals with trimethoxysiloxy groups and having a viscosity of 900 mPa·s (i.e., a dimethylpolysiloxane capped at both molecular chain terminals with trimethoxysiloxy groups, which corresponds to the one shown by the above formula (2), wherein X = an oxygen atom, R¹ = R² = a methyl group, a = 0, and n = approximately 270); 8 parts by mass of n-decyltrimethoxysilane; 0.8 parts by mass of polypropylene (number average molecular weight of 8,300) capped at both molecular chain terminals with di(isopropenoxy)methylsiloxy groups, which exhibits a viscosity of 3,500 mPa·s; and 32 parts by mass of fumed silica surface-treated with hexamethyldisilazane having a BET specific surface area of 200 m²/g were mixed at room temperature for 30 minutes and subsequently processed through a three-roll mill, manufactured by Inoue Mfg. Co., Ltd., once to prepare Composition Base C.

Into 100 parts by mass of the composition base C were uniformly mixed 0.5 parts by mass of carbon black, 5 parts by mass of vinyltrimethoxysilane, 1 part by mass of an aminosilane represented by the above formula (5), and 5 parts by mass of diisopropoxytitanium bis(ethylacetoacetate) at room temperature for 20 minutes to obtain Composition 3.

### <Comparative Composition Example 1>

Into 100 parts by mass of Composition Base A were uniformly mixed 0.5 parts by mass of carbon black; 8 parts by mass of a dimethylpolysiloxane capped at both molecular chain terminals with trimethylsiloxy groups and having a viscosity of 100 mPa·s; 5 parts by mass of vinyltrimethoxysilane; 1 part by mass of an aminosilane represented by the above formula (5); and 5 parts by mass of diisopropoxytitanium bis(ethylacetoacetate) at room temperature for 20 minutes to obtain Composition 4.

The prepared compositions 1 to 4 were each used to measure the properties to be described below.

### •Curability

The prepared compositions 1 to 4 were each allowed to stand in an environment at 23°C/50% RH for seven days to be cured so as to have a thickness of 3 mm, thus preparing measurement samples of silicone rubber cured products (3 mm in thickness), and the hardness of Type-A, elongation, and tensile strength were measured according to JIS K 6249.

It was previously confirmed that the surfaces of the above-mentioned compositions 1 to 4 become tack-free (the surfaces thereof turned into cured thin film states) after standing for 3 minutes in an environment at 23°C/50% RH.

### •Thixotropy index

Each of the prepared Compositions 1 to 4 was subjected to viscosity measurement at rotational speeds of 1 rpm and 10 rpm using a B-type viscometer in accordance with JIS K 6249 from which the thixotropy index (measured viscosity value at 1 rpm/ measured viscosity value at 10 rpm) was calculated.

The obtained results are as shown in table 1.

**[Table 1]**

| | Unit | Composition 1 | Composition 2 | Composition 3 | Composition 4 |
|---|---|---|---|---|---|
| Hardness of Type-A | | 50 | 47 | 65 | 41 |
| Elongation | % | 450 | 500 | 160 | 630 |
| Tensile strength | MPa | 5.0 | 4.7 | 5.1 | 3.5 |
| Thixotropy index | | 7.2 | 8.6 | 7.0 | 3.3 |

### Working Examples 1 to 3 and Comparative Example 1

3D printing was conducted on a polyethylene film, serving as a base material, using each of the compositions 1 to 4. A 3D-BIOPLOTTER (manufactured by Envisiontec), equipped with a dedicated dispenser head (2K Head), was used as the printing device. Utilizing the device's integrated software, various shapes-including straight lines (line), Z-shaped patterns (Zig-Zag), wavy curves (Wave), and honeycomb structures-can be produced by dispensing the compositions from the dispenser head. Furthermore, the printing device allows for free adjustment of line width, line spacing, and angle of the discharging composition, enabling printing of intended shapes as desired.

The following procedure was employed to fabricate the 3D article.

### Step i):

A syringe containing each of the above compositions 1 to 4 was placed on a moving stage in a platform, where a building job for the target object to be 3D printed using the composition was set up, and each composition was dispensed from the syringe onto the polyethylene film base material within a controlled application area.

The composition was applied at a coating speed of 12.3 mm/s under conditions specifying a coating line width of 0.25 mm and a coating height per layer (layer thickness) of 0.2 mm.

### Step ii):

The first layer, formed on the base material using each of the compositions 1 to 4, was allowed to stand for a duration of 3 minutes under environmental conditions of 23°C and 50% RH, thereby rendering the surface of the first layer tack-free.

### Step iii):

Each of the compositions 1 to 4 was used to perform the 3D printing on the first layer with the tack-free surface under the conditions same as those of the step i) to form a second and optionally further one or more subsequent layers.

### Step iv):

The second and optionally further one or more subsequent layers formed by the above compositions 1 to 4 were left to stand for a duration of 3 minutes under environmental conditions of 23°C and 50% RH during each layer formation, thereby rendering the surfaces of the second and optionally further one or more subsequent layers tack-free.

The above steps iii) and iv) were repeated a total of 49 times to stack a total of 50 partially cured layers, which had tack-free surfaces and formed using each of the compositions 1 to 4, thereby forming a 3D article with a thickness of 10 mm. The tack-free 3D article was left to stand for 2 days under environmental conditions of 23°C and 50% RH to produce a fully cured 3D article.

### •3D Scanning Stability

Three-dimensional scanning was conducted on 3D articles fabricated using the compositions 1 to 4 to assess their stability based on the criteria indicated below.

The dimensional deviation between the programmed image and the actual fabricated article was evaluated according to the following criteria in which
o indicates a dimensional error of less than 0.5 mm; and
× indicates a dimensional error of 0.5 mm or greater.

The results for the compositions 1 to 4 are as shown in Table 2 below.

**[Table 2]**

| | Working Example 1 | Working Example 2 | Working Example 3 | Comparative Example 1 |
|---|---|---|---|---|
| Composition | 1 | 2 | 3 | 4 |
| 3D Scanning Stability | ○ | ○ | ○ | × |

The compositions 1 to 3 exhibited minimal dimensional errors and demonstrated stable 3D scanning characteristics. The composition 4, characterized by a low thixotropy index, resulted in poor 3D scanning stability. Due to the low thixotropy index of the composition 4, each layer of the composition exhibited poor shape stability, resulting in structural collapse of the 3D article during the lamination process.

## Claims

1. A method for producing a three-dimensional (3D) molded article, comprising the steps of:
i) applying a first room temperature-curable organopolysiloxane composition onto a base material using a 3D printing device to form a first layer, wherein the first room temperature-curable organopolysiloxane composition exhibits a thixotropy index of 5 or higher and lower than 10;
ii) allowing the first layer under non-heated conditions to form a partially cured first layer;
iii) applying a second and optionally further one or more subsequent room temperature-curable organopolysiloxane compositions onto the partially cured first layer using a 3D printing device to form a second and optionally further one or more subsequent layers, wherein each composition has a thixotropy index of 5 or higher and lower than 10; and
iv) allowing the second and optionally further one or more subsequent layers under non-heated conditions during each layer formation to form a partially cured second and optionally further one or more subsequent layers.

2. The method for producing a three-dimensional (3D) molded article according to claim 1, wherein the steps iii) and iv) are repeated one or more times using a third and/or further one or more subsequent room temperature-curable organopolysiloxane compositions each having a thixotropy index of 5 or higher and lower than 10.

3. The method for producing a three-dimensional (3D) molded article according to claim 1, wherein the first, second, and further one or more subsequent room temperature-curable organopolysiloxane compositions independently cure in the presence of atmospheric moisture.

4. The method for producing a three-dimensional (3D) molded article according to claim 1, wherein the first, second, and further one or more subsequent room temperature-curable organopolysiloxane compositions are all identical to one another.

5. The method for producing a three-dimensional (3D) molded article according to claim 1, wherein each of the first, second, and further one or more subsequent room temperature-curable organopolysiloxane compositions contains:
(A) at least one organopolysiloxane having, on average, at least two silicon-bonded hydroxyl groups (silanol groups) or hydrolysable silyl groups per molecule;
(B) a hydrolysable (organo) silane composition and/or a partially hydrolyzed condensate thereof;
(C) an inorganic filler; and
(D) a curing catalyst.

6. The method for producing a three-dimensional (3D) molded article according to claim 5, wherein the component (A) comprises one or more organopolysiloxanes represented by formula (1) and/or formula (2) defined as 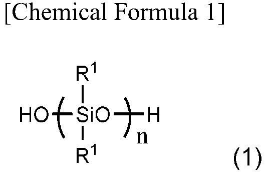 wherein, in the formula (1), each R¹ independently represents a substituted or unsubstituted monovalent hydrocarbon group having 1 to 10 carbon atoms and n is a number of 10 to 2,000; and 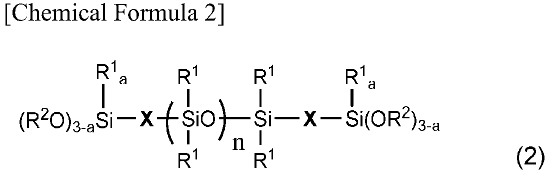 wherein, in the formula (2), each R¹ independently represents a substituted or unsubstituted monovalent hydrocarbon group having 1 to 10 carbon atoms, n is a number of 10 to 2,000, each R² independently represents a substituted or unsubstituted monovalent hydrocarbon group having 1 to 6 carbon atoms, each X independently represents an alkylene group having 1 to 4 carbon atoms or an oxygen atom, and a is 0 or 1 independently for each silicon atom to which it is bonded.

7. The method for producing a three-dimensional (3D) molded article according to any one of claims 1 to 6, further comprising: allowing a partially cured three-dimensional (3D) molded article, produced by undergoing the steps i) to iv), under non-heated conditions to produce a fully cured three-dimensional (3D) molded article.

8. A partially cured three-dimensional (3D) molded article produced by the method according to any one of claims 1 to 6.

9. A three-dimensional (3D) molded article produced by the method according to claim 7.
